# EUROPEAN PATENT APPLICATION

(11) **EP 1 430 770 A1**
(43) Date of publication of application: **23.06.2004**
(21) Application number: 03104428.2
(22) Date of filing: 27.11.2003
(51) Int. Cl.: A01G 13/02, A01G 25/02

(54) **Combination mulch sheeting and irrigation tube and method and apparatus for fabricating same**

(30) Priority: 16.12.2002 IT SV20020062
(71) Applicant: Ditta Colombo, Marco, 18015 Riva Ligure (IM) (IT)
(72) Inventor: Colombo, Marco, 18015 Riva Ligure (Imperia) (IT)
(74) Representative: Karaghiosoff, Giorgio Alessandro, Dr.

(57) **Abstract**

Combination mulch sheeting (1) and irrigation tube (2), characterized in that the irrigation tube (2) is stably affixed to or integrated in the mulch sheeting (1).

The invention further relates to the method and apparatus for fabricating said combination.

## Description

The invention relates to a combination mulch sheeting and irrigation tube.

At present, sheet mulches are widely used in agriculture. These mulches, generally made of plastic, are laid on soils in which plants are to be sown or planted, if they were sown and had grown in another site. To this end, once that a sheet mulch has been laid over a specially prepared soil, apertures are formed therein at the locations in which seeds are to be sown or plants are to be planted. The lateral, longitudinal and/or transverse peripheral edges are generally buried in the ground to secure the sheet mulch in such a manner as to prevent it from being raised by the wind.

Before laying the sheet mulch on the ground, at least one drip irrigation tube, having a plurality of holes arranged along its length, is generally also laid on the ground. One of the ends of the tube is sealed and the other is connected to an irrigation liquid feed pipe. The tube is generally a hose which is formed by a tubular plastic tape, which is unrolled over the soil through a desired length, i.e. slightly beyond the sheet mulch's length, and is thereafter covered by the sheet. Depending on the length of the sheet mulch and of the rows of adjacent plants covered thereby, a number of substantially parallel irrigation tubes, disposed at predetermined lateral distances from each other, shall sometimes be laid on the ground before the sheet mulch.

Therefore, prior art systems as described above have a first drawback in that two separate elements shall be laid, i.e. at least one irrigation tube and then at least one sheet mulch. When several irrigation tubes are to be laid, the time requirement is accordingly higher.

Also, the irrigation tube may follow uncontrollable and irregular patterns, under the sheet mulch, and when apertures are formed in the mulch for planting or sowing plants, this may often cause the irrigation tube to be damaged, if it is in a wrong position under the sheet mulch in the planting or seeding area.

This drawback might be obviated by providing tube holding means. These means would involve an increase of the time required to lay the irrigation tube and the mulch. Moreover, when the mulch is removed, the fastening means shall be recovered, to prevent them from loading the ground with foreign material, generally plastic, and this further increases time consumption and costs.

The invention has the object of providing a combination mulch sheeting and at least one irrigation tube which, by using simple and inexpensive means, may effectively obviate the above drawbacks.

The invention fulfils the above objects by providing a combination of a mulch sheeting and at least one irrigation tube, wherein the irrigation tube is stably secured to or integrated in the mulch sheeting.

The inventive teaching may be implemented in several manners.

According to a preferred embodiment the irrigation tube is formed by a tubular tape segment which has a plurality of delivery holes arranged along its length and is affixed by physico-chemical bonding to the bottom soil contacting side of the mulch sheeting. The delivery holes are formed on the side opposite the mulch sheeting fixation side.

Such a tube may be fastened to the mulch sheeting by welding.

Advantageously, the irrigation tube is affixed to the mulch sheeting by one or more longitudinal weld beads, for attaching the mulch sheeting contact side of said tube.

Alternative to the previous embodiment, the irrigation tube may consist, on one side, of a tape-like sheet segment having delivery holes arranged along its length, which sheet is attached by physico-chemical bonding of its peripheral edges to the mulch sheeting face which is turned or is designed to be turned toward the soil, the portion of the mulch sheeting with the tape-like sheet thereon forming the other wall part of the irrigation tube.

Here, advantages are obtained from sealingly affixing the longitudinal edges of the tape-like sheet to the mulch sheeting, by one or more continuous longitudinal side weld beads.

As an alternative to the provision of delivery holes, at least along one edge of the tape-like sheet, the weld bead/s may be arranged to be discontinuous, with the discontinuities forming the delivery holes. This would avoid the need of a separate hole forming step in the fabrication process, but welding would require a few additional arrangements to ensure discontinuity of the weld bead.

According to a further embodiment a mulch sheeting may be provided, which is composed of two superposed sheets, the irrigation tube being formed by a chamber that extends along an intermediate longitudinal strip of the mulch sheeting, which is sealingly delimited on each side, relative to the rest of the sheeting, by at least one respective weld bead, which is formed by physico-chemical bonding of the two sheets that form the mulch sheeting.

In accordance with a further characteristic, the side beads for sealingly delimiting the chamber that forms the irrigation tube consist of weld beads.

When a separate irrigation tube is provided, which is to be affixed to the mulch sheeting, spot welds may be provided, instead of the weld bead or line, to secure the irrigation tube to the mulch sheeting.

Also, at least one of the two superposed sheets that form the mulch sheeting may include, in the longitudinal strip that forms the irrigation tube, a plurality of holes arranged along the length of said sheet.

The combination of the invention may include at least one irrigation tube extending along the length of the mulch sheeting, i.e. along an intermediate longitudinal axis thereof. Preferably, the irrigation tube divides the mulch sheeting into two longitudinal strips which are designed to cover corresponding planting or seeding strips.

Advantageously, each irrigation tube has end portions that project out of the ends of the mulch sheeting, one of said end portions being sealingly choked, whereas the other of the projecting ends may be sealingly attached to an outlet which delivers water or another fluid or an irrigation mixture.

The combination according to the invention may include a mulch sheeting and two or more substantially parallel irrigation tubes, which are laterally spaced at a distance corresponding to the width of the cultivated land strip to be mulched.

According to another advantageous characteristic of the combination of this invention, there may provided, in combination with or separately from the at least one irrigation tube, at least one or a row of ballast pockets or one or a row of ballast chambers, which chamber/s or pocket/s are affixed to or integrated in the mulch sheeting and which chamber/s or pocket/s or the row/s of said chambers or pockets extend across a portion or substantially the whole of the length of at least one peripheral longitudinal edge of the mulch sheeting.

The chamber/s or pocket/s or the row/s of chambers or pockets are oriented and arranged substantially parallel to the length of the irrigation tube and are advantageously, but without limitation, provided along both opposite peripheral sides of a mulch sheeting. At least some or all of the ballast chambers or pockets form peripheral elongate tanks along longitudinal edges of the sheeting for a ballast liquid, such as water or the like.

According to an improvement, the ballast chamber/s have a tubular shape and consist of tubular tape elements which are secured by physico-chemical bonding or by welding to a face of the mulch sheeting along the corresponding longitudinal side edge.

Like the irrigation tube/s, the side ballast chamber/s may consist of a tape-like sheet which is affixed by physico-chemical bonding or by welding to the underside of the mulch sheeting along at least one peripheral longitudinal edge thereof, so that the ballast chamber/s are formed partly by the tape-like sheet and partly by the mulch sheeting strip coincident with said tape-like sheet.

When the mulch sheeting is composed of two superposed sheets, the ballast chamber/s may be formed by peripheral strips along at least one side edge of the mulch sheeting, and along which strips the two sheets of the mulch sheeting are sealingly interconnected, by physico-chemical bonding, or welding, both along the outermost side edge and along an internal connecting strip parallel or substantially parallel to the outermost peripheral edge of the mulch sheeting and at a predetermined distance from said edge.

In lieu of two sheet components, the ballast chamber/s are formed each of a tape-like sheet sealingly connected to the sheet component of the sheeting along the two opposite side edges to form a tubular chamber with the facing sheet component of the sheeting.

When the mulch sheeting consists of a flattened tubular sheet, the ballast chamber/s are already closed along the corresponding outermost side edge of the sheeting along the tubular sheet fold line whereas, at a predetermined distance therefrom in the direction of the intermediate area of the sheeting, a line or strip is provided for mutual sealing connection by physico-chemical bonding or welding of the two superposed tubular sheet portions for forming at least one tubular ballast chamber along the corresponding side edge of the mulch sheeting.

In one embodiment, along each of at least two opposite peripheral edges, the mulch sheeting has a tubular ballast chamber, which is fastened or integrated in the sheeting, which chamber is continuous or formed by a row of separate chambers, which chamber/s are sealed and have at least one sealable filling inlet and/or discharge outlet or a separate filling inlet and a separate discharge outlet both being sealable.

The peripheral ballast chamber/s have at least one filling inlet/discharge outlet substantially along all the peripheral edges, and extend along at least a portion or all of the length of said peripheral edges.

In accordance with another characteristic of the invention, the sheeting face opposite to face that adheres to the soil to be mulched has marks that delimit the mulching area, and/or the irrigation tube area and/or the ballast chambers, which are applied or printed on the surface of said sheeting face and/or marks for indicating the function of the delimited area.

Several different methods for welding may be provided instead of contact welding, e.g. the use of hot air or ultrasounds which act in a contactless manner with the parts to be welded, thereby simplifying the fabrication process.

Alternative to the embodiments and fabrication steps as described above, there may be provided coextrusion of the irrigation tube/s and possibly of the ballast chambers together with the mulch sheeting. Then, the irrigation tube/s and/or the ballast chamber/s may be generated since the extrusion of the mulch sheeting, while the holes of the irrigation tube are formed in a subsequent processing step.

Regarding the making and the fixation of the irrigation tube/s, either previously formed in a separate step to be later affixed to the sheeting, or formed by sheet tapes or junction weldings in a double sheet sheeting, a central welding may be provided, which divides the irrigation tube into two longitudinal halves, each being dedicated and having holes oriented or arranged toward the ground strip immediately adjacent the longitudinal half of the irrigation tube.

Furthermore, in all the embodiments of the combination mulch sheeting and irrigation tube/s as described above, planting or seeding hole arrangements in the mulch sheeting and irrigation holes in the irrigation tube/s may be provided, which follow predetermined irrigation optimizing rules. Particularly, at least one or a set of delivery holes may be provided in the irrigation tube, level with a planting or seeding hole formed in the adjacent portion of the mulch sheeting. By this arrangement, each plant that has been planted or sown is capillarily irrigated.

However, regarding the ballast chambers, a variant that may be used in all possible embodiments thereof provides that said chambers be disposed at a certain distance from the longitudinal side edge of the mulch sheeting, thereby leaving a free peripheral side strip of the mulch sheeting, and preventing the ballast chambers from being walked on or possibly damaged, or punctured when walking over the mulch sheeting in the transverse direction.

When said ballast chambers consist of prefabricated tubes, to be affixed to the mulch sheeting, the welds or points whereat they are affixed to the sheeting are provided in such positions that the ballast chamber is recessed sideways with respect to the longitudinal side edges of the sheeting. This also applies to the fabrication of said ballast chambers by using tape-like sheets.

In the embodiment that provides welds between the two sheets that form the mulch sheeting, the latter may be simply recessed sideways from the longitudinal side edge of the mulch sheeting.

Once more, for ballast chambers, an additional intermediate longitudinal weld line may be provided to longitudinally divide each chamber into two separate chambers, thereby increasing operational reliability in that, when one of the two chambers is broken, the other operates correctly. Such median weld line may also have the function of attaching the ballast chamber to the sheeting, in the same manner as described for the irrigation tube, when said chamber is made of a prefabricated tube to be simply affixed to the sheeting in the expected location.

Note that the invention provides any possible combination of the characteristics as described with reference to specific embodiments, even in other embodiments, when this is possible.

The invention also relates to a method for fabricating the combination mulch sheeting and irrigation tube as described above, which forms the subject of the dependent claims, as well as an apparatus for fabricating said combination and implementing said method, which is also covered by the dependent claims.

Further improvements of the invention will form the subject of the subclaims.

The characteristics of the invention and the advantages deriving therefrom will appear more clearly from the following description of a few non-limiting embodiments which are illustrated in the accompanying drawings, in which:
Figs. 1 and 2 are top views of a first embodiment of the invention, with one or two irrigation hoses respectively.
Figs. 3 and 4 are perspective views of a second embodiment of the invention, as taken from the top and the bottom respectively, i.e. from the exposed side and from the side that is designed to rest on the ground in the operating condition.
Fig. 5 shows an end portion of an outlet of the hose which is sealingly choked by knotting.
Figs. 6 and 7 show two variants of a third embodiment of the invention.
Figs. 8 to 11 are cross sectional views of different embodiments of the invention.
Fig. 12 is a schematic view of a hose extruder, which comprises a perforating unit.
Figs. 13 and 14 show an enlarged detail of the freely movable shielding member, which is used for forming holes in the hose, with the perforating unit being integrated in the extruder as shown in Figure 12.
Fig. 15 is an enlarged view of a perforating unit with the hose being shown in section, and with the freely movable shielding member being inserted in the hose.
Fig. 16 is a side schematic view of an apparatus for welding a hose to a mulch sheeting or for fabricating the combination mulch sheeting and irrigation hose/s as shown in one or more of the preceding Figures.
Figs. 17 to 22 show an enlarged detail of the welding skid as taken in the direction opposite to the forward direction of the mulch sheeting and with the welding skid being used for fabricating the combination mulch sheeting and irrigation hose according to the invention.
Fig. 23 shows a variant embodiment of the invention, in which the ballast chambers are recessed with respect to the longitudinal side edges of the mulch sheeting.
Figs. 24 and 25 show, like Figs. 8 to 11, a variant embodiment in which the irrigation hose is divided into two longitudinally adjacent hoses, by a weld line that, when a prefabricated irrigation hose is provided, to be later joined to a sheet of the mulch sheeting, may also have the function of securing said tube to said sheet.

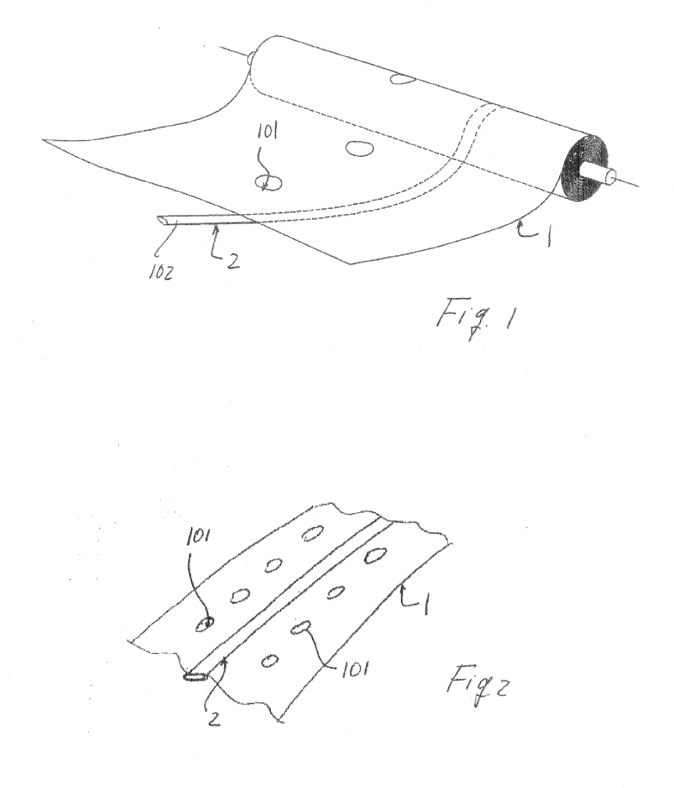

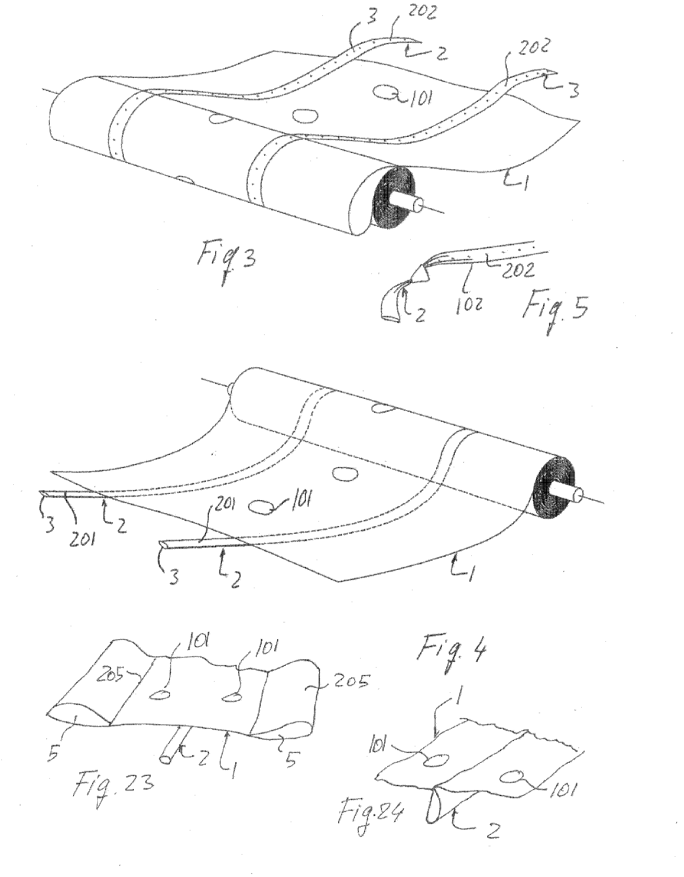

Figs. 1 and 2 show a first exemplary embodiment of a combination mulch sheeting and irrigation hose according to the present invention. In this first embodiment, a mulch sheeting 1 has such a predetermined width as to cover a ground strip that is sufficiently wide for planting or sowing two rows or plants or the like. A hose is provided in the central portion of the mulch sheeting 1, which is formed by a tubular tape 2, and is affixed to the side of the mulch sheeting 1 that is designed to adhere to the ground. The tape-like hose 2, which is made of plastic, is attached to the mulch sheeting 1 by physico-chemical bonding. Particularly, the tape-like hose 2 is affixed to the mulch sheeting 1 by welding. As shown in Figures 8 and 9, this is preferably obtained by a single weld bead or line 4, which extends all along the mulch sheeting 1 and the tape-like hose, along a longitudinal side edge of the hose 2, as shown in Fig. 9. Alternatively, a weld bead or line 4 may be provided along both side edges of the hose 2, as shown in Fig. 8. The weld lines 4 are formed by pressing one of the peripheral side strips of the hose 2 against the mulch sheeting 1, while heating it to the welding temperature of the plastic material that forms the sheeting 1 and the irrigation hose 2.

Other fixing systems may be provided alternative to welding, such as gluing or the like. Spot welding at regular or irregular intervals along the length of the tube 2 and the sheeting 1 may be also provided instead of continuous welding.

Advantageously, the tape-like hose 2 is longer than the mulch sheeting 1 and projects beyond at least one of the transverse end sides thereof, preferably beyond both transverse end sides of the sheeting 1, its end portions 102 forming a connection to a feed line and a sealable discharge outlet. As a rule, the inlet is slipped over the end of a feed pipe and tightly clamped thereon by means of hose clamps. On the other hand, the discharge outlet has such a length that it can be sealingly choked, e.g. by simply knotting it on itself, as shown in the detail of Figure 5. It shall be noted that any pressure of the irrigation liquid that is fed to the hose 2 shall be released through the irrigation holes 202 that are formed in the peripheral wall of the tape-like hose 2. The latter are disposed in a substantially even arrangement along the length of said hose 2, possibly at distances that correspond to typical distances for planting or seeding.

The irrigation holes 202 are formed on the hose sides turned toward the ground on which the mulch sheeting 1 is laid. Obviously, two, three or more rows of holes having identical or different diameters may be arranged on the wall of the tube 2 in several different patterns or orders, depending on the desired irrigation effect.

Figure 1 shows a hose 2 for a single strip of soil for planting or seeding plants along a single row. Fig. 2 shows an irrigation hose 2 which is placed at the center of the sheeting, thereby dividing it into two strips, that are designed to lie over corresponding adjacent soil strips, to be served by the same irrigation hose 2. Each strip may have a row of apertures 101 disposed at typical planting or seeding distances or such apertures may be formed later upon planting or seeding.

The considerations that were made about the embodiment of Figure 1 also apply to the embodiment of Figure 2, in which case the mulch sheeting 1 is extended from the two longitudinal edges in such a manner as to have a sufficient width to cover another soil planting or seeding strip, which substantially correspond to half the central strip between the two irrigation hoses 2 and including the two parallel rows of planting or seeding apertures 101. In this case, the mulch sheeting 1 having two irrigation hoses 2 covers four planting or seeding strips, and each pair of adjacent strips is irrigated by one hose 2 that is placed in an intermediate, particularly central position, between the two strips of each pair of adjacent strips.

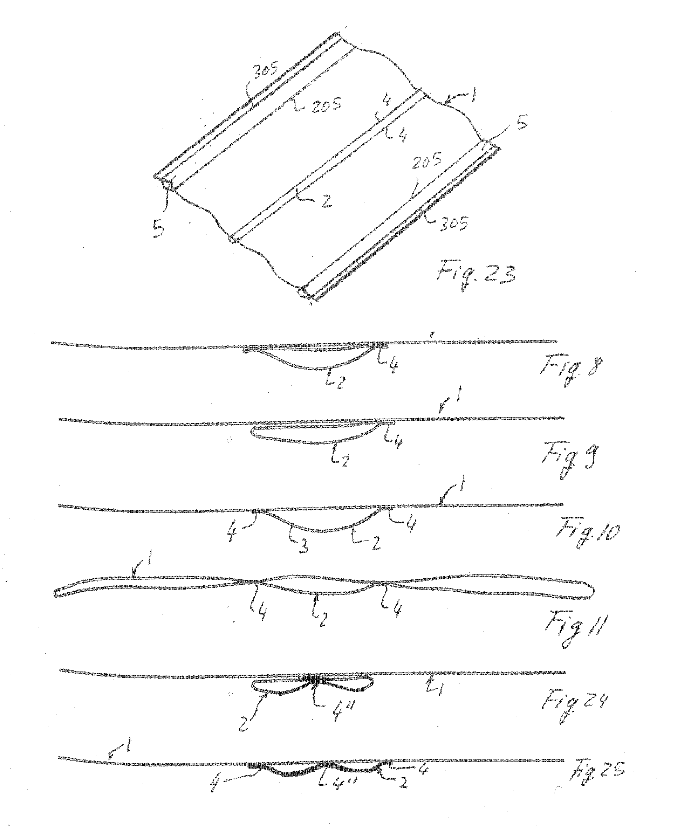

Figs. 3 and 4 show a first variant embodiment of the combination according to the embodiment as shown in the previous Figures. Here, the hose 2 is integrated in the mulch sheeting, i.e. it is not formed separately as a whole hose, but the hose is partly formed by the mulch sheeting and partly formed by a tape-like sheet 3 which is sealingly secured along its longitudinal side edges to the mulch sheeting 1. The tape-like sheet 3 may be a strap of the same plastic material as the mulch sheeting and is directly secured to the mulch sheeting 1 by weld beads or lines 4 along the side longitudinal edges thereof, as shown in Fig. 10.

Like in the previous embodiment, once more the hose part projects out of at least one transverse end side of the mulch sheeting 1, preferably out of both transverse end sides of the mulch sheeting 1. In this case, the ends of the mulch sheeting 1 are accordingly shaped, i.e. have extensions 201 on at least one, preferably both end sides, which extensions are coincident with and substantially correspond in length and width to the projecting portions of the tape-like sheet 3.

The tape-like sheet 3 has, like the hose 2 of the previous embodiment, delivery holes 202 arranged in at least one row along the length of the tape-like sheet. Still like the previous embodiment, a single row of holes or two or more rows may be provided, with any desired pattern of delivery hole arrangement.

According to a variant embodiment, not shown in detail, one or both weld lines for affixing the tape-like sheet to the mulch sheeting may be discontinuous, in such a manner as to form delivery holes at the discontinuities. This characteristic may be provided either alternatively to or in combination with delivery holes formed in the tape-like sheet.

Obviously, the considerations about the arrangement and number of hoses 2 that were made for the previous embodiment also apply to this embodiment. Therefore, two, three or more irrigation hoses may be joined to the mulch sheeting 1. These may be arranged over the width of the mulch sheeting at predetermined distances, which may be approximately identical or even different.

It shall be noted that the above considerations apply to all the embodiments as shown and described in this disclosure. Furthermore, for all embodiments, in the simplest form, the hoses may only extend in the same longitudinal direction and be substantially parallel. Nevertheless, variant embodiments may be further provided, in which two or more hoses, associated to the same mulch sheeting 1 extend in non parallel, and particularly substantially transverse directions, and may also cross each other.

According to a third embodiment, the arrangement of the single sealingly affixed tape-like sheet 3 may be replaced by two sheets, having substantially identical sizes, which form a double-sheet mulch sheeting 1. Here, the hose/s 2 are made in the same manner as described with reference to the embodiment of Figures 3 and 4 and 10, except that, instead of a tspe-like sheet 3, a sheet is provided which extend over the same size as the sheet that forms the mulch sheeting 1.

The peripheral edges of the two sheets may be further welded to remain joined together and simplify application thereof, by preventing relative edge displacement, which complicates the application of the mulch sheeting.

Here, advantages may be obtained from using a single sheet of material, to be folded back on itsef along a median longitudinal line, thereby obtaining a single side edge of the mulch sheeting along which the two sheets are to be joined together.

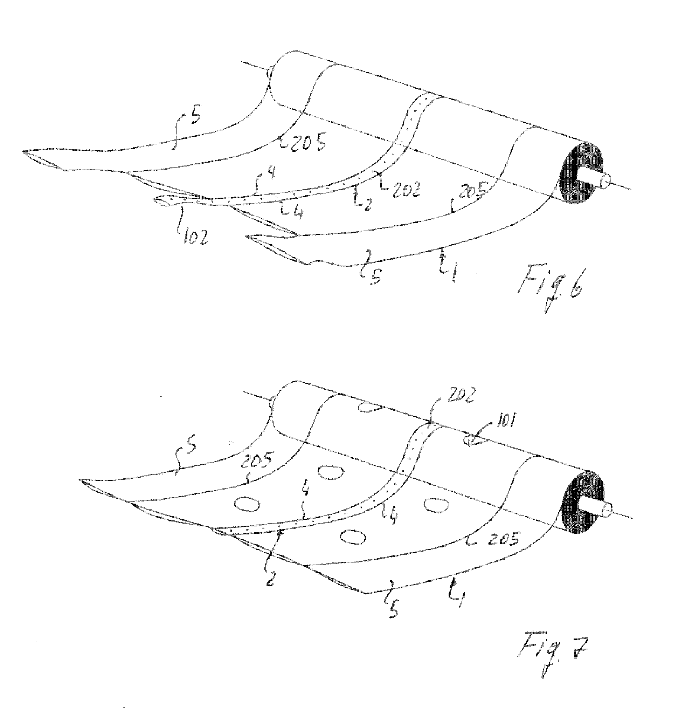

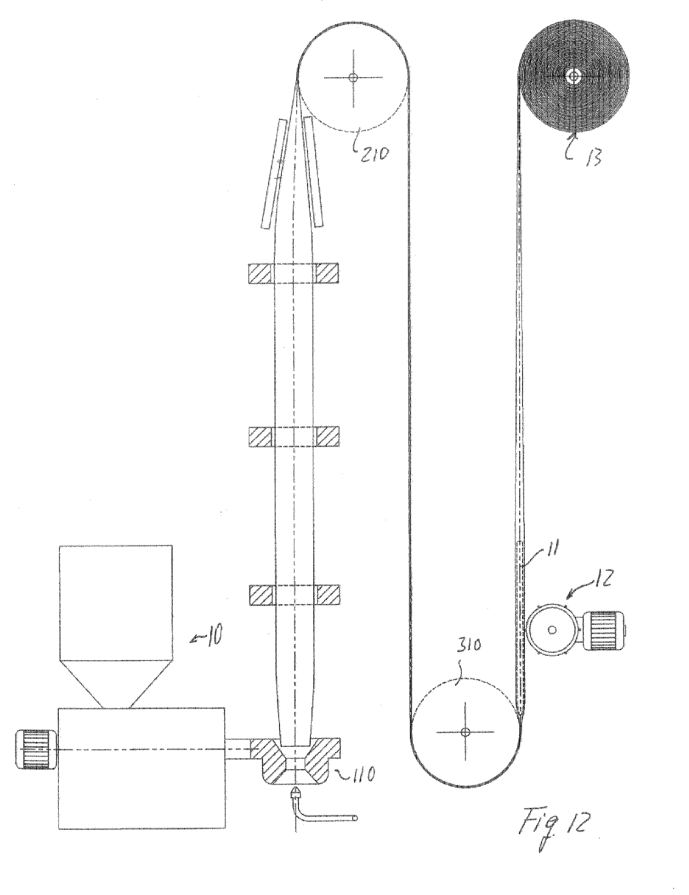

In the preferred variant of this third embodiment, as shown in Figures 6, 7 and 11 a flattened tubular sheet is used for the mulch sheeting. Here, the peripheral longitudinal side edges are already joined together, whereas the hose/s 2 are formed by weld lines or beads 4 which sealingly delimit the longitudinal side edges of the hose/s 2 from the rest of the mulch sheeting, as clearly shown in Figure 11. Particularly, like in the embodiments of the previous Figures, in lieu of a straight end side as shown in Figure 7, the mulch sheeting 1 having an integrated irrigation hose 2, may be cut in such a manner as to have a projecting portion 102 of the hose/s on one or both of the end edges. Like in the previous embodiments, the irrigation hose has delivery holes 202 and the sheeting may or may not have apertures 101 for planting or seeding.

Yet, like in the previous embodiments, the mulch sheeting may have one or two or more hoses having different orientations relative to the mulch sheeting 1.

According to a variant embodiment, as shown in Figures 24 and 25, a median weld line 4" may be provided for affixing a hose 2 to the sheet that forms the sheeting 1, which line not only connects the hose face turned toward the sheeting, but also joins together the two opposite faces of the hose 2, thereby forming a double hose, with the two component hoses having parallel lengths. In this case, each of the two hoses has irrigation holes for irrigating the ground strip that is directly adjacent to and on the same side as the longitudinal median weld.

Such median weld may be provided, for instance, as shown in Fig. 25, in any construction variant of the integrated combination of the mulch sheeting and irrigation hose/s. Fig. 25 shows the variant in which an irrigation hose is formed by welding a tape-like sheet to the sheet that forms the mulch sheeting 1.

In accordance with a further characteristic of the invention, in the combination mulch sheeting and irrigation hose/s 2, along the longitudinal side edges of the mulch sheeting, ballast pockets or chambers may be provided to facilitate application thereof. Preferably, the ballast material is water and the ballast chambers designated with numeral 5 in Figures 6 and 7 are continuous peripheral side tubular chambers that are made in the same manner as the hoses 2. In the embodiment as shown in Figs. 6 and 7, the peripheral side ballast chambers 5 are obviously already closed along the outermost side edge and are delimited toward the median area of the mulch sheeting 1 by weld lines 205. These weld lines 205 are like the weld lines 4 that delimit the irrigation hose/s 2 and may be formed at the same time as them.

Like the irrigation hose/s, the ballast chambers 5 extend beyond the end edge/s of the mulch sheeting 1 by portions 105 that have the function of filling inlets and/or discharge outlets, which may be sealed by choking, e.g. simply by knotting as shown in Fig. 5 for the irrigation hose 2. Obviously, the ballast chambers 5 do not have irrigation holes.

While the ballast chambers are only shown for the embodiment of Figs. 6 and 7, such chambers may be also provided in the other embodiments or variants described above, and shown in one or more of Figures 1 to 4, several construction variants being applicable thereto in any combination with the above described construction embodiments of the irrigation hose.

Hence, in the variant of the third embodiment, which provides a two-sheet mulch sheeting instead of the tubular sheet, a weld line shall be also provided along the corresponding outermost peripheral side edge of the mulch sheeting, which line is not required in the tubular design of the sheeting 1, as said edges are automatically closed thanks to the tubular shape of the sheeting 1.

The above mentioned ballast chambers 5 may be made like the irrigation hose 2 as shown in Figs. 3, 4, and 10, a tape-like sheet being provided for each chamber, which is sealed along its longitudinal side edges to the mulch sheeting, coincident with the longitudinal side strips thereof, by weld lines 105.

Ballast chambers may be also made from flexible tubular tapes, obviously non perforated, which are similar in all respects to those used for the irrigation hose 2 of the embodiment of Figures 1, 2, 8 and 9, and are affixed to the longitudinal side strips of the mulch sheeting, in the same manner as the irrigation hose 2 as shown in Figures 8 and 9.

Another variant of the ballast chambers 5 is shown in Fig. 23. Here, the hoses that form said chambers are affixed in a recessed position with respect to the longitudinal side edge of the sheeting 1. This may be also obtained by the variants in which the ballast chambers 5 are formed by welding tape-like sheets to the sheeting or in two-layer sheeting, either of the flattened tubular shape or formed by two superposed sheets. In both cases, the two parallel welds 205, 305 are disposed in such a manner that the outermost weld 305 extends at a certain distance from the corresponding longitudinal side edge, thereby leaving a free longitudinal side strip. This provides the advantage of limiting the possibility of inadvertently walking on the ballast chamber, and running the risk of damaging it, e.g. of puncturing it over clods, stones or other bodies lying on the ground. The side strip may have various widths and may be possibly also used as a ground anchorage reinforcement, by arranging it to be at least partly buried in a ground trench.

Regarding fixation, the ballast chambers 5 may be themselves affixed by an intermediate weld line, dividing them longitudinally into two halves, thereby ensuring that, whenever one of the two half-chambers is damaged, the other is fully operational.

The advantages of the present invention are self-evident from the above, and provide an easy installation of the mulch sheeting and hose, by a single installation step, consisting in simply unrolling the combination mulch sheet and irrigation hose. In fact, said combination may be rolled into rolls of material, as shown, wherefrom desired lengths may be unrolled. The projecting portions of the irrigation hose may be simply obtained by cutting the end sides in such a manner as to provide said projecting portions. By providing connection or integration of irrigation hoses and the mulch sheeting, not only is it possible to avoid separate installation of the irrigation hose/s and the mulch sheeting, but a predetermined position of the irrigation hose/s may be held. This prevents hose breaking, when apertures 101 are formed in the sheeting and plants are planted or seeds are sown, due to improper positioning of the hose. It shall be further considered that, for considerably large pieces of land, the sheeting will be unrolled from a roll which is mounted on the rear of an agricultural machine. In this case, since the irrigation hose/s are to be previously laid on the ground, there is the risk that they are damaged by the agricultural machine as the latter passes thereon for laying the mulch sheeting, which risk is totally avoided thanks to this invention.

As is easily understandable, thanks to the fact that the irrigation hose/s are welded to the mulch sheeting, the latter are readily visible from the top side of the mulch sheeting, particularly when the sheeting has no planting or seeding apertures 101 preformed therein.

According to yet another characteristic, the exposed side of the mulch sheeting may have marks for indication of irrigation hose and/or ballast chamber delimiting lines, as well as marks for indication of the typical position of apertures to be formed in the sheeting for seeding or planting plants and account for the typical row crop cultivation distances. This further simplifies the use of the sheeting according to this invention, thereby allowing it to be used by unskilled personnel for seeding or planting plants.

It shall be further noted that the invention provides no limitation to the width of the mulch sheeting and the number of irrigation hoses and possible ballast chambers, hence it can be applied to sheetings having various transverse sizes with respect to the orientation of rows.

Note that, for large widths, ballast chambers may be also provided along intermediate longitudinal strips of the mulch sheeting, in addition to those provided along the peripheral side strips, as shown in Figures 6 and 7.

As described hereafter, the invention also provides considerable advantages regarding the method for fabricating the combination of the mulch sheeting and at least one irrigation hose and the apparatus for fabricating it.

Figure 12 schematically shows an apparatus for extrusion of a perforated hose suitable for the embodiment of Figures 1, 2, 8 and 9. Here, a tape-like hose is extruded by a conventional extruder, designated with numeral 10, is cooled downstream from the die 110 and is flattened to form a tape and deviated along return pulleys 210 toward a lower output pulley 310, a perforating unit being provided downstream therefrom, at a vertical portion of the path of the flattened tape hose. In order to prevent perforation from extending to the flattened hose side which is designed to adhere against or be turned toward the mulch sheeting, a shielding plate member 11 is housed in the hose which is freely movable, though held in position by gravity against upward displacement and by the flattened hose deviating curve of the return pulley 310. Level with the freely movable shielding member 11, which safely has a certain longitudinal extension, a perforating unit is provided, which is generally designated with numeral 22.

Referring now to the detail of Figure 15, the perforating unit has a perforating roller 112, which may be displaced against the tape-like hose, level with the freely movable shielding member 11, and has peripheral perforating tips, punches or cutters 212. The number of said tips 212 and the arrangement thereof along the periphery of the perforating roller 112 depends on the tape feed speed and on the rotation speed of the perforating roller, as well as on the desired spacing between the holes to be formed in the wall of the tape hose.

The perforating roller 112 is rotatably driven by a motor 312, whose rotational speed may be controlled by the above parameters.

Downstream from the perforating roller, and vertically above it, the path of the tape-like hose ends in a winding station, wherein a coil of flattened and perforated tape hose 13 is formed.

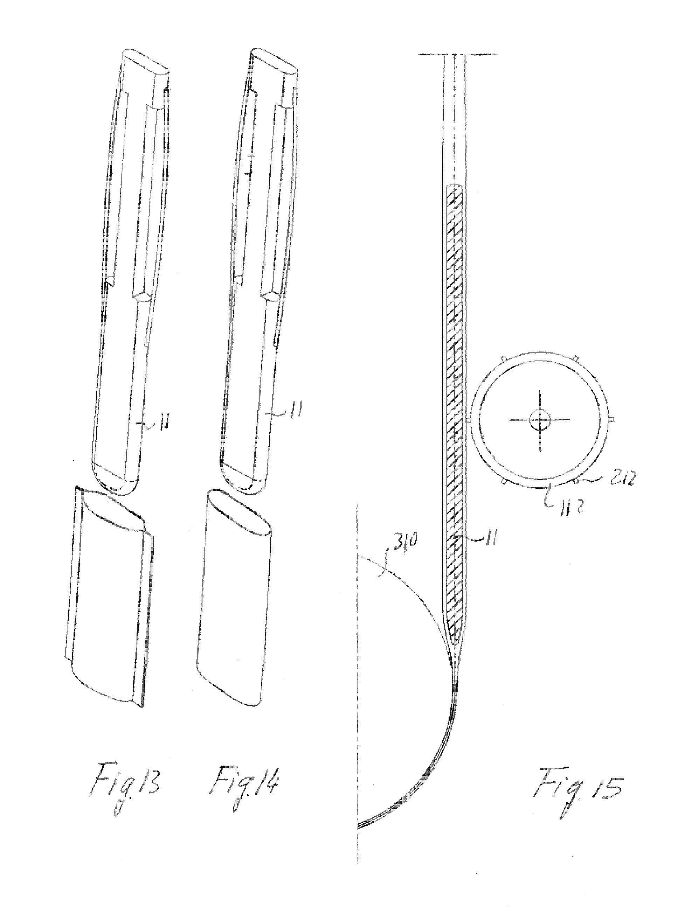

Fig. 13 shows a variant embodiment, wherein the tape hose is obtained by extrusion of two tape-like sheets 3, 3' which are sealingly joined together along their peripheral edges, i.e. by welding. In this case, a sheet may be preperforated, or the holes may be formed in a perforating unit downstream from a station in which the two tape-like sheets are welded together, and which is identical to that of Figures 12 and 15.

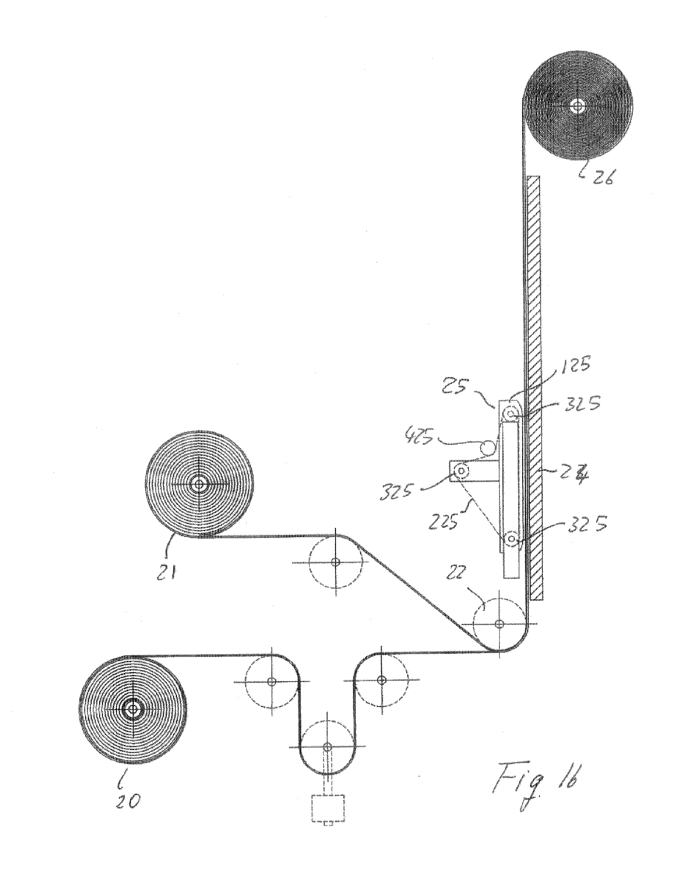

One apparatus may be substantially sufficient for fabricating any embodiment of the combination of the mulch sheeting and the irrigation hose/s and/or any ballast chambers, said apparatus being schematically shown in Fig. 16. In its simplest form, the apparatus has two unwinding stations 20, 21. The tapes or sheets from the two unwinding stations are led in a superposed position to a lower bend wheel 22, which changes the path of travel of the superposed tapes or sheets, along a vertical or anyway upward portion. Said vertical or upward portion extends along a surface plate 24. A skid-mounted welder 25 is provided opposite to the surface plate. Advantageously, said welder, to be described in detail hereafter, is supported by a system of rods which enable displacement thereof into the operating position against the surface plate 24 and into a position away therefrom. Such system for supporting the welder is not shown in detail, as its fabrication is included in the basic skills of those skilled in the art and requires no inventive action. A winding station for forming a roll 26 of finished product is provided downstream from the surface plate and the welder 25 associated thereto.

The unrolling stations 21 and 22 may include a roll of a plastic sheet for forming the mulch sheeting 1 and a coil of tape hose or of tape-like sheet 3, or a second sheet for forming a second layer of the mulch sheeting, to obtain the embodiment of Figures 1 to 7. When the sheeting is formed by a tubular sheet, then one unwinding station 21 or 22 is only necessary, wherefrom the tubular sheet of the mulch sheeting is unwound.

The welder has a welding head 125 which consists of a welding rib or roller or the like, which is adapted to generate a weld line in the form of a thin strip. The welding head or roller 125 is heated in a conventional manner by electric heating means and is made of metal. If two parallel spaced weld lines are to be provided, like in the embodiment of Figures 3 and 4, the welder preferably has two welding heads or rollers 125. Preferably, the welding heads are formed by two welding skid-like plates, which are placed on edge, i.e. perpendicular to the surface to be welded, in such a manner as to contact the latter by the thinnest edge. Advantageously, the skid-like plates are suitably arched at the surface in contact with the material to be welded.

When two welding plates or heads 125 are provided, the latter may be connected alternately or together to the heating means or have separate heating means, that may be operated separately.

Advantageously, the two welding plates are disposed on both sides of a skid that has a continuous presser belt 225 in its intermediate portion, which belt runs around end rollers 325 and is held in a stretched condition by stretching means 425, such as a takeup pulley which is elastically stressed in the belt stretching direction.

It shall be noted that the apparatus as shown may be easily adapted to make mulch sheetings of different width, and having two or more hoses in different areas, and optionally two or more ballast chambers.

If the irrigation hoses and/or the ballast chambers are formed by tape-like hoses or sheets, which are to be welded at different locations, relative to the width of the mulch sheeting, then a single axle, for instance the axle of the unrolling station 21 may carry several adjacent coils of tape-like hose or sheet, each in one position of the axle of said unrolling station 21, coincident with the position of the irrigation hose or the ballast chamber on the mulch sheeting.

In this case, in lieu of a single axle, a support guide may be provided, which has a predetermined length in the axial direction of the unrolling axle of the coils of tape-like hose or sheet, on which guide rotary supports for the individual coils may be fitted, by means of shoes that slide on said guide and may be locked in position thereon.

Furthermore, an identical welder 25 is provided level with each coil of tape-like hose or tape-like sheet. Here again, each welder may be mounted on a support which is arranged to slide on a skid along a guide parallel to the transverse extension of the sheeting, which skids may be locked in position.

Such construction of the welder's supports may be also used for fabricating a mulch sheeting with integrated irrigation hose/s and integrated ballast chambers according to one of the two variants of the embodiment of Figures 6 and 7.In this case, when the sheet has a tubular shape, a single unwinding station is required, whereas the individual welders are brought to a position coincident with the desired weld lines and locked in position. Conversely, when the sheeting is composed of two composite sheets, each sheet is unwound from a roll in a respective unwinding station 21 and 22.

When the mulch sheeting is composed of a double sheet of material, like in the variant embodiment of Figures 6 and 7, and particularly when said sheeting is formed by a tubular sheet, but also in other cases, a perforating station may be integrated in the fabricating apparatus, which station may be substantially as described with reference to the tape hose extruder as shown in Figures 12 to 15. In this case, the perforating unit may be provided directly downstream or upstream from the welders and the freely movable shielding member 11 may extend from the output of the lower bend wheel 22, all along the welder 25, between the two spaced heads 125 up to the perforating unit (not shown in detail in Figure 16).

According to a variant embodiment, the perforating unit may be integrated in the welder, the belt 225 being provided with perforating tips, or a perforating roller like that of the perforating unit as shown in Figs. 12 and 15 being integrated in the welder's structure. Here, both the belt and the roller may be driven by a motor or be rotatably driven by the material being processed.

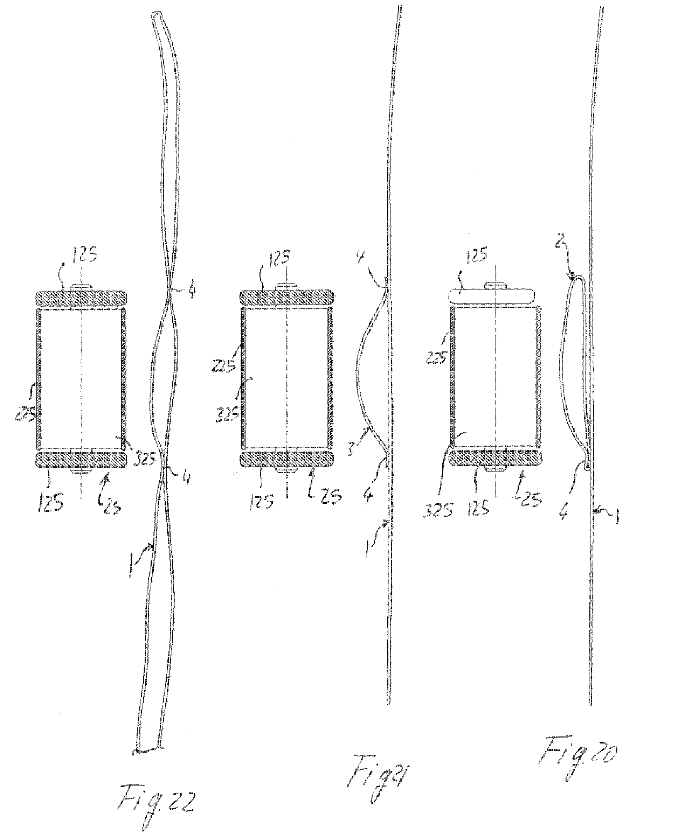

Figs. 17 to 22 show a few embodiments of the welds that are required for implementing the embodiments as shown in Figures 1 to 11, relative to the irrigation hose. These embodiments are also applicable, when possible, to the making of ballast chambers.

Fig. 17 shows the welder 25 with the two welding plates 125 in spaced rest positions, the tape-like hose 2 and the mulch sheet 1.

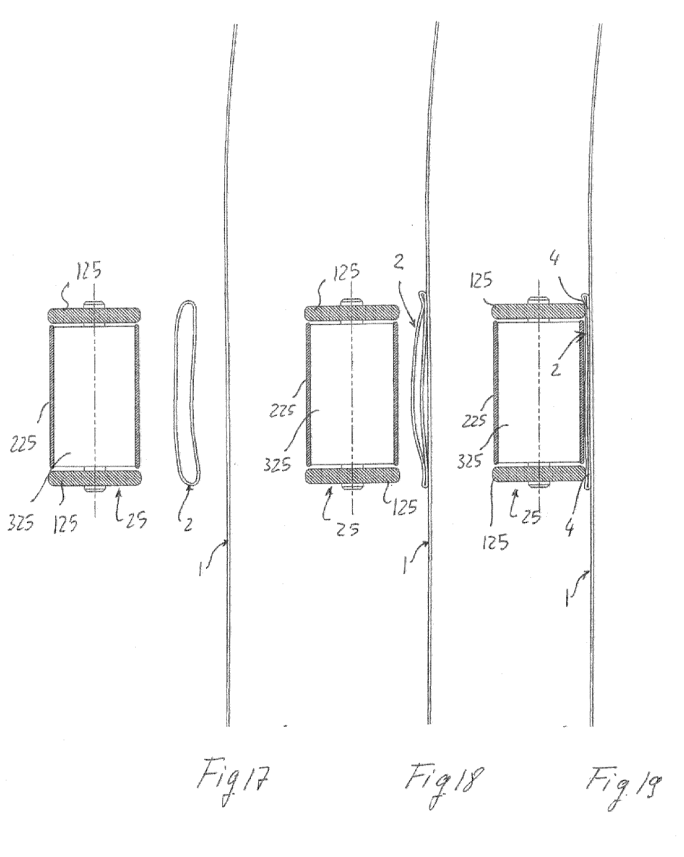

Fig. 18 shows an intermediate position of said parts, whereas Fig. 19 shows the welder while it is pressed against the tape-like hose 2 and against the mulch sheet in an operating welding position for forming peripheral side weld lines 4 according to the sectional view of Fig. 8.

Figs. 20 to 21 show, like the previous Figures, the same welder in a raised position after performing the welds for making the combination mulch sheeting and irrigation hose according to the variants of Figures 9, 10 and 11. It shall be noted that, for forming the single weld on one peripheral side edge of the tape-like hose 2 according to the embodiment of Figure 9, the welding plate along which no weld is to be formed is idle. In Figure 20 this is shown by the fact that the plate is not hatched.

As previously mentioned, depending on the modes of fabrication of the ballast chambers 5, a single welder 25, according to one of the embodiments of Figures 17 to 22, may be used, without requiring any variant to the apparatus and method, except proper positioning of the welder and actuating both welding plates 125 or one of them according to the embodiment of the ballast chambers 5.

It shall be further noted that, in order to ensure that the welded parts only adhere against each other along the weld lines, a freely movable shielding member 11 may be used, even when no perforation unit is provided, but only the welders are present.

The method for fabricating the combination mulch sheeting and irrigation hose/s and/or one or more ballast chambers is highly simple, fast and allows simultaneous application or fabrication of two or more irrigation hoses and/or two or more ballast chambers in any position along the width of the mulch sheeting.

The apparatus is simple, versatile and inexpensive.

Also, it may be easily integrated in a continuous line, in which the mulch sheet/s are simultaneously coextruded with the tape-like sheet/s 3 and/or the tape-like hoses.

When marks are provided on the mulch sheeting, either directly printed thereon, or provided by application of adhesive preprinted sheets, the apparatus as described above may be integrated, downstream from the welding station and possibly from the perforating unit, with a print or preprinted sticker application station before winding the finished product to obtain a complete line.

Further, automatic end cutting means may be provided, depending on the shapes of the different embodiments as described and shown above, particularly for the portions of the irrigation hose and/or the ballast chambers that project beyond the end sides of the sheeting.

When predetermined lengths are to be obtained, a station may be integrated in the apparatus, for forming predetermined tear off lines, such as those that are conventionally used, for instance, for the rolls of plastic bags or the like.

The same apparatus as shown in Fig. 16 may be also used for forming ballast chambers and/or irrigation hoses which extend transverse to the mulch sheeting, by providing rolling stations with vertical, i.e., transverse axles. In this case, the welders may be further mounted in such a manner as to be able to slide along vertical guides, which allow displacement thereof in a direction transverse to the mulch sheeting rolling direction, whereas the same rolling station having a horizontal axle may be used for the tape-like sheets and/or tape-like hoses.

While the invention has been shown and described herein with reference to means for affixing or forming the irrigation hose and/or the ballast chambers by welding, it will be apparent that, for obtaining the combination mulch sheeting and irrigation hose, even different techniques may be used. Therefore, for instance, welding may be effected by using radiation or hot air welders, or said combination mulch sheeting and irrigation hose and/or ballast chamber may be formed by direct extrusion of an appropriately shaped die. In this case, the mulch sheeting, the irrigation hose/s and/or any possible ballast chambers are integrated in a one-piece sheet.

Referring to an additional variant, the irrigation hose/s may arranged to be micro-perforated at least over a portion or their wall.

The sheet that forms the mulch sheeting may also be microperforated.

Fig. 23 shows a further variant embodiment of the ballast hose/s 5. Here, a side strip of the mulch sheet 1 is folded within the sheeting and welded thereto along the free longitudinal edge, thereby forming a ballast hose 5. By performing such operation along both sides, two longitudinal side ballast hoses 5 are obtained by a single welding step.

Fig. 24 shows a variant in which a double fold of the mulch sheeting is used for forming the irrigation hose. The two free edges of the two opposite folds may be joined together sealingly, in which case delivery holes must be provided, or joined together in a discontinuous manner, thereby directly forming the delivery holes.

Further variants of the invention are possible.

According to a further variant, the mulch sheet is made of a biodegradable plastic material, such as for example the material denominated "MATER-BI" produced by NOVAMONT S.p.A., Novara, Italy.

Alternatively the mulch sheet can be made out of a woven or non woven tissue. The tissues may be of non biodegradable or of biodegradable fibers. An example of non woven tissues which can be used for the present invention are the non woven fabrics of the family denominated "ACRISOFT PP FLEECE UV STABILIZED" of FABRIANO SOFT S.r.l. Peschiera Borromeo, Italy.

According to yet another variant, the mulch sheet can be made of microperforated or microporouse or other permeable sheets. Thus the irrigation tube or tubes may be without any delivery hole. The irrigation water will thus pass from the tube to the earth through the micropores or the microholes or through the permeable sheet. Alternatively the irrigation tubes may also be provided with some irrigation hole. Furthermore, due to the permeability to water, an irrigation effect can be also achieved through the sheet when water is distributed by a natural or artificial rain effect.

According to a further variant, the irrigation holes can be distributed all over the surface of each irrigation tube with different densities and or patterns. Holes in the tubes may be provided at other parts of the tibes than the lower side of the tube walls adhering to the soil or at the same time at different sides of the tube wall. Particularly the holes may be provided at the lower side and at the upper side of the tube wall referring to the soil.

Relating to the positioning of the irrigation tubes this may be provided also in an eccentric position relatively to the width of the mulch sheet and/or relatively to two lateral ballast chambers.

Both the irrigation tubes and the ballast chambers also in the form of a tube, can be closed by means of clips at least at one open end thereof. The irrigation tube being provided with a protruding terminal extension which can be plied or rolled on itself several times before being sealingly pressed by a clips or other elastic pressing means.

The sheet can have designed on it or already cut away zones predetermined zones corresponding to the location were the single plants has to be planted.

According to a further variant, the invention provides for a mulch sheet as described above where only ballast chambers are provided at least on one edge thereof, particularly on both opposite edges, or also elsewhere distributed over the extension of the sheet. The ballast chambers can be made according to the ballast chambers described above. In this case, the sheet can be made of water permeable material or of microporose or microperforated material such as to allow to carry out the irrigation by distributing the water as rain.

Relating to the method for fabricating a mulch sheet according to the invention, an alternative method may consist in a direct extrusion of the mulch sheet with at least one or more irrigation tubes and or alternatively with one or more ballast chambers. Although the apparatus is more expensive than the one described above the price for each sheet can be reduced decisively when a higher production rate is requested.

## Claims

1. A combination mulch sheeting and irrigation tube, **characterized in that** the irrigation tube is stably affixed to or integrated in the mulch sheeting.

2. A combination as claimed in claim 1, **characterized in that** the irrigation tube is formed by a tubular tape segment which has a plurality of delivery holes arranged along its length and is affixed by physico-chemical bonding to the bottom soil contacting side of the mulch sheeting.

3. A combination as claimed in claim 2, **characterized in that** the irrigation tube has delivery holes on the side opposite the mulch sheeting fixation side.

4. A combination as claimed in one or more of the preceding claims, **characterized in that** the irrigation tube is affixed to the mulch sheeting by welding.

5. A combination as claimed in one or more of the preceding claims, **characterized in that** the irrigation tube is affixed to the mulch sheeting by one or more longitudinal weld beads, for attaching the mulch sheeting contact side of said tube.

6. A combination as claimed in claim 1, **characterized in that** the irrigation tube consists, on one side, of a tape-like sheet segment having delivery holes arranged along its length, which sheet is attached by physico-chemical bonding of its peripheral edges to the mulch sheeting face which is turned or is designed to be turned toward the soil, the portion of the mulch sheeting with the tape-like sheet thereon forming the other wall part of the irrigation tube.

7. A combination as claimed in one or more of the preceding claims, **characterized in that** the longitudinal edges of the tape-like sheet are sealingly attached to the mulch sheeting, by one or more continuous longitudinal side weld beads.

8. A combination as claimed in claim 6 or 7, **characterized in that**, at least along one edge of the tape-like sheet, the weld bead/s are discontinuous, with the discontinuities forming the delivery holes.

9. A combination as claimed in claim 1, **characterized in that** the mulch sheeting is composed of two superposed sheets, the irrigation tube being formed by a chamber that extends along an intermediate longitudinal strip of the mulch sheeting, which is sealingly delimited on each side, relative to the rest of the sheeting, by at least one respective weld bead, which is formed by physico-chemical bonding of the two sheets that form the mulch sheeting.

10. A combination as claimed in one or more of the preceding claims, **characterized in that** the side beads for sealingly delimiting the chamber that forms the irrigation tube consist of weld beads.

11. A combination as claimed in claim 9 or 10, **characterized in that** at least one of the two superposed sheets that form the mulch sheeting includes, in the longitudinal strip that forms the irrigation tube, a plurality of holes arranged along the length of said sheet.

12. A combination as claimed in one or more of the preceding claims, **characterized in that** it includes at least one irrigation tube extending along the length of the mulch sheeting, i.e. along an intermediate longitudinal axis thereof.

13. A combination as claimed in one or more of the preceding claims, **characterized in that** the irrigation tube divides the mulch sheeting into two longitudinal strips which are designed to cover corresponding planting or seeding strips.

14. A combination as claimed in one or more of the preceding claims, **characterized in that** each irrigation tube has end portions that project out of the ends of the mulch sheeting, one of said end portions being sealingly choked, whereas the other of the projecting ends may be sealingly attached to an outlet which delivers water or another fluid or an irrigation mixture.

15. A combination as claimed in one or more of the preceding claims, **characterized in that** it comprises two or more substantially parallel irrigation tubes, which are laterally spaced at a distance corresponding to the width of the cultivated land strip to be mulched.

16. A combination as claimed in one or more of the preceding claims, **characterized in that** multiple laterally spaced, substantially parallel irrigation tubes are arranged over the width of the mulch sheeting.

17. A combination as claimed in one or more of the preceding claims, **characterized in that** at least one or a row of ballast pockets or one or a row of ballast chambers are provided, which chamber/s or pocket/s are affixed to or integrated in the mulch sheeting and which chamber/s or pocket/s or the row/s of said chambers or pockets extend across a portion or substantially the whole of the length of at least one peripheral longitudinal edge of the mulch sheeting.

18. A combination as claimed in claim 17, **characterized in that** the chamber/s or pocket/s or the row/s of chambers or pockets are oriented or arranged substantially parallel to the length of the irrigation tube.

19. A combination as claimed in one or more of the preceding claims, **characterized in that** the ballast chamber/s or pocket/s or the row/s of said chambers or pockets are disposed along both opposite peripheral sides of a mulch sheeting.

20. A combination as claimed in one or more of the preceding claims, **characterized in that** at least some or all of the ballast chambers or pockets form peripheral elongate tanks along longitudinal edges of the sheeting for a ballast liquid, such as water or the like.

21. A combination as claimed in one or more of the preceding claims, **characterized in that** the ballast chamber/s have a tubular shape and consist of tubular tape elements which are secured by physico-chemical bonding or by welding to a face of the mulch sheeting along the corresponding longitudinal side edge.

22. A combination as claimed in one or more of the preceding claims, **characterized in that** the side ballast chamber/s consist of a tape-like sheet which is affixed by physico-chemical bonding or by welding to the underside of the mulch sheeting along at least one peripheral longitudinal edge thereof, so that the ballast chamber/s are formed partly by the tape-like sheet and partly by the mulch sheeting strip coincident with said tape-like sheet.

23. A combination as claimed in one or more of the preceding claims, **characterized in that** the mulch sheeting is composed of two superposed sheets, the ballast chamber/s being formed by peripheral strips along at least one side edge of the mulch sheeting, and along which strips the two sheets of the mulch sheeting are sealingly interconnected, by physico-chemical bonding, or welding, both along the outermost side edge and along an internal connecting strip parallel or substantially parallel to the outermost peripheral edge of the mulch sheeting and at a predetermined distance from said edge.

24. A combination as claimed in claim 23, **characterized in that**, in lieu of two sheet components, the ballast chamber/s are formed each of a tape-like sheet sealingly connected to the sheet component of the sheeting along the two opposite side edges to form a tubular chamber with the facing sheet component of the sheeting.

25. A combination as claimed in claim 23, **characterized in that** the mulch sheeting consists of a flattened tubular sheet, the ballast chamber/s, closed along the corresponding outermost side edge of the sheeting consisting the tubular sheet fold line whereas, at a predetermined distance therefrom in the direction of the intermediate area of the sheeting, a line or strip is provided for mutual sealing connection by physico-chemical bonding or welding of the two superposed tubular sheet portions for forming at least one tubular ballast chamber along the corresponding side edge of the mulch sheeting.

26. A combination as claimed in one or more of the preceding claims, **characterized in that**, along each of at least two opposite peripheral edges, the mulch sheeting has a tubular ballast chamber, which is fastened or integrated in the sheeting, which chamber is continuous or formed by a row of separate chambers, which chamber/s are sealed and have at least one sealable filling inlet and/or discharge outlet or a separate filling inlet and a separate discharge outlet both being sealable.

27. A combination as claimed in one or more of the preceding claims, **characterized in that** the mulch sheeting has one or more peripheral ballast chamber/s, which have at least one filling inlet/discharge outlet substantially along all the peripheral edges, and extend along at least a portion or all of the length of said peripheral edges.

28. A combination as claimed in one or more of the preceding claims, **characterized in that** the sheeting face opposite to face that adheres to the soil to be mulched has marks that delimit the mulching area, and/or the irrigation tube area and/or the ballast chambers, which are applied or printed on the surface of said sheeting face and/or marks for indicating the function of the delimited area.

29. A method for fabricating a combination mulch sheeting and at least one irrigation hose, consisting of a flattened tubular tape, which is affixed to the mulch sheeting on the side that adheres against the soil to be mulched, as claimed in one or more of the preceding claims, **characterized in that** it comprises the following steps:
a) extruding a sheet that forms the mulch sheeting;
b) extruding a flattened tubular tape;
c) perforating one wall of the tubular tape;
d) driving the tubular tape and the sheet along converging paths in concordant directions and at the same speed until they attain a condition in which said tubular tape contacts the sheet and inserting, downstream from the first contact area, a heat shielding member inside the tubular tape, which shielding member is a freely movable plate member having a smaller width than the tubular tape, so that at least one longitudinal side strip or optionally two opposite longitudinal side strips of said tubular tape remain free.
e) maintaining the contact condition and direction and speed concordant drive of the tubular tape and the sheet;
f) welding the tubular member to the sheet by heating one or all side strips of the tubular tape, that are not occupied by the shielding member, by using heating welders, to be brought to contact with said free side strips of the tubular tape.

30. A method as claimed in claim 29, **characterized in that** the concordant drive path of the tubular tape and the sheet is such that the contact between the tubular tape and the sheet occurs at a return roller, downstream wherefrom the path extends vertically upwards, the shielding member being held in position against the tubular tape drive force exerted thereon by friction, thanks to gravity exerted on said shielding member.

31. A method for fabricating a combination mulch sheeting and at least one irrigation hose, consisting of a flattened tubular tape, which is sealingly affixed, along its peripheral longitudinal side edges, to the mulch sheeting on the side thereof that adheres against the soil to be mulched, as claimed in one or more of the preceding claims, **characterized in that** it comprises the following steps:
a) extruding a sheet that forms the mulch sheeting;
b) extruding a tape-like sheet;
c) perforating the tape-like sheet;
d) driving the tape-like sheet and the sheet of the sheeting along converging paths in concordant directions and at the same speed until they attain a condition in which said tape-like sheet contacts the sheet of the sheeting, applying thereon a welding head which has one or two welding plates, with separate plates being spaced at such a distance as to overlap the peripheral longitudinal edges of the tape-like sheet and inserting, immediately downstream from the first contact area, a heat shielding member inside the tubular tape, which shielding member is a freely movable plate member having a smaller width than the tape-like sheet and than the distance between the welding plates, so that at least one longitudinal side strip or optionally two opposite longitudinal side strips of said tape-like sheet remain free, along which strip/s the welding plates are arranged to slide.
e) maintaining the contact condition and direction and speed concordant drive of the tubular tape and the sheet of the sheeting along the welding length.

32. A method as claimed in claim 31, **characterized in that** the concordant drive path of the tape-like sheet and the sheet of the sheeting is such that the contact between the tubular tape and the sheet of the sheeting occurs at a return roller, downstream wherefrom the path extends vertically upwards, the shielding member being held in position against the tubular tape drive force exerted thereon by friction, thanks to gravity exerted on said shielding member.

33. A method as claimed in one or more of the preceding claims, **characterized in that** the mulch sheeting is composed of two superposed sheets, and that it implements the steps as claimed in claims 31 and 32, wherein the tape-like sheet is replaced by the second sheet of the mulch sheeting, the welder with the welding plate/s being brought into contact with the superposed sheets in an intermediate portion thereof.

34. A method as claimed in one or more of the preceding claims 29 to 33, **characterized in that** the mulch sheeting is formed by a flattened tubular sheet, the latter being driven along a path which has a vertical orientation downstream from a portion of the path that has an orientation transverse to the vertical direction, particularly substantially horizontal, and wherein the welder with the welding plate/s is brought into contact with the superposed portions of the tubular sheet in an intermediate portion thereof.

35. A method as claimed in one or more of the preceding claims 29 to 34 for making a combination mulch sheeting and irrigation tube, further comprising at least one ballast pocket or tubular chamber, **characterized in that** the tubular ballast chamber/s are made in the same manner as the irrigation hose, i.e. as claimed in one or more of claims 29 to 34.

36. A method as claimed in one or more of the preceding claims 29 to 35, **characterized in that** the fixation of the irrigation tube or ballast chambers to the mulch sheeting or the integration of the irrigation tube or ballast chambers therein occur simultaneously.

37. A method as claimed in one or more of the preceding claims 29 to 36, **characterized in that** it provides simultaneous fixation or generation of two or more substantially parallel irrigation hoses, arranged over the width of the sheet of the sheeting.

38. An apparatus for fabricating a combination mulch sheeting and irrigation tube as claimed in one or more of the preceding claims 1 to 28, and for implementing the method as claimed in one or more of claims 29 to 37, **characterized in that** it comprises a first sheet unwinding path that extends from a magazine roll to a winding roll, which path includes an upward or vertical portion which is directly downstream from a horizontal portion or anyway transverse to the vertical portion of the path, a bend wheel being provided at the connection between said two path portions;
a second unwinding path from a magazine roll or coil to the same winding roll as the first path, for a tubular tape, a tape-like sheet and/or an additional sheet of the sheeting, which second path also comprises an upward or vertical portion, which is directly downstream from a horizontal portion or anyway transverse to the vertical portion of the path, a bend wheel being provided at the connection between said two path portions;
the first and second paths are converging and have the same bend wheel between the at least two path portions;
the upward path portion extends at least partly along a compression plane, which faces toward a welding skid with one or two weld heads, spaced at a predetermined distance;
an elongate freely movable plate-like shielding member being provided between the sheet of the sheeting along the first path and the tape-like sheet or the additional sheet of the sheeting or inside the flattened tape-like hose, which elongate freely movable plate-like member has a width smaller than the distance between the two weld heads.

39. An apparatus as claimed in claim 38, **characterized in that** it comprises at least one magazine roll of a sheet of the sheeting, and at least two, three or more rolls or coils of a tape-like hose or a tape-like sheet, which tape-like hoses or tape-like sheets are unwound along identical paths, adjacent and at a certain predetermined distance from each other, at least along the vertical path portion, a freely movable shielding member and one or two welding heads being provided at the vertical path portion of each tape-like hose or each tape-like sheet.

40. An apparatus as claimed in claim 38 or 39, **characterized in that** it comprises two magazine rolls for two sheets of the sheeting, one being unwound along the first path and the other being unwound along the second path, there being provided at least two, three or more welding heads or pairs of welding heads arranged over the width of the sheets of the sheeting, at predetermined distances from each other, and each welding head being associated to a freely movable shielding member.

41. An apparatus as claimed in one or more of the preceding claims 38 to 40, **characterized in that** it comprises one or more welding heads, which are fitted on a guide extending transverse to the feed direction along the vertical path portion, each welding head being slideably fitted along said guide and removably lockable in position.

42. An apparatus as claimed in one or more of the preceding claims, **characterized in that** it has a continuous axle for supporting one or more coils of tape-like hose or tape-like sheet, the coils being mounted on skid cores, that are adapted to slide along said axle and to be locked in position thereon, and said axle being oriented transverse to the hose and sheet sliding direction, and in the same direction as the width of the sheet of the sheeting.

43. A combination as claimed in one or more of the preceding claims 1 to 28, **characterized in that** the irrigation hose (2) and/or the ballast chamber/s (5) have a continuous or discontinuous median longitudinal weld (4") which divides them into two parallel longitudinal tubes.

44. A combination as claimed in claim 43, **characterized in that** each of the two longitudinal halves of the irrigation hose, separated by the median longitudinal weld (4") has irrigation holes formed and/or positioned in such a manner as to allow irrigation of the strip of soil on the same side from the median weld (4").

45. A combination as claimed in claim 43 or 44, **characterized in that** the median weld (4") joins together both the opposite walls of a tape-like irrigation and/or ballast hose (2, 5) and the adhering faces of the tape-like hose and the mulch sheeting (1).

46. A combination as claimed in one or more of claims 1 to 28 and 43 to 45, **characterized in that** the ballast hose/s (5) are placed in recessed positions with respect to the corresponding longitudinal side edge of the mulch sheeting.

47. A combination as claimed in one or more of the preceding claims 1 to 28 and 43 to 45, **characterized in that** the delivery holes of the irrigation tubes (2) are located level with the associated apertures (101) of the mulch sheeting (1).

48. A method of making a mulch sheeting combination as claimed in one or more of the preceding claims 1 to 28 and 43 to 47, **characterized in that** welding is performed by contactless heating means such as hot air flows and/or radiation heating.

49. A method of making a mulch sheeting combination as claimed in one or more of the preceding claims 1 to 28 and 43 to 47, **characterized in that** the mulch sheeting (1), the irrigation tube/s (2) and the ballast chamber/s (5), if any, are made of one piece by extrusion through an accordingly shaped die.

50. A combination mulch sheeting and one or more irrigation tubes as claimed in one or more of the preceding claims, **characterized in that**, as an alternative to the delivery holes or in combination therewith, at least the irrigation hose/s are formed, along at least a portion of their wall, by a microperforated sheet.

51. A combination as claimed in one or more of the preceding claims, **characterized in that** the sheet of the mulch sheeting may also be at least partly microperforated.

52. A combination as claimed in one or more of the preceding claims, **characterized in that** the ballast tube (5) is formed by a longitudinal side strip of the sheet (1) of the sheeting, which is folded on the sheeting and sealingly welded or affixed thereto along the free longitudinal edge.

53. A method of making the combination as claimed in claim 52, **characterized in that** it comprises the steps of inwardly folding, against the sheet of the sheeting, a peripheral longitudinal side strip thereof and of sealingly welding or affixing against the sheet the free longitudinal edge of said folded strip.

54. A combination as claimed in one or more of the preceding claims, **characterized in that** the irrigation tube is formed by a simple or double longitudinal side fold or a median fold, adapted to form a tubular pocked by welding along a free edge of said fold.

55. A method of making the combination as claimed in claim 54, **characterized in that** it includes the step of forming a double fold in the median position of a sheet and sealingly or discontinuously welding the opposed edges of the fold.

56. A combination as claimed in one or more of the preceding claims 1 a 28 e 43 a 52, **characterized in that** the mulch sheet and /or the irrigation tubes and/or the ballast chambers are made by a biodegradable plastic material.

57. A combination as claimed in one or more of the preceding claims 1 a 28 e 43 a 52, **characterized in that** the mulch sheet and /or the irrigation tubes and/or the ballast chambers are made by a woven or a non woven tissue of natural, and/or artificial and/or biodegradable and/o non biodegradable fibers or mixtures thereof.

58. A combination as claimed in one or more of the preceding claims 1 a 28, 43 a 52 and 56, 57, **characterized in that** the holes in the irrigation tubes are provided also at the upper side of the walls of the tubes or with different distributions and/o densities at further different zones or all over the surface of the irrigation tubes.

59. A mulch sheet according to one or more of the preceding claims 1 a 28, 43 to 52 and 56 to 58, **characterized in that** no irrigation tube is provided but only at least one ballast chamber, particularly at least two ballast chambers along opposite edges of the sheet are provided or three, or more ballast chambers are provided in combination with the mulch sheet. The ballast chambers being made according to the irrigation tubes but without the holes and/or according to the ballast chambers of claims 17 a 28.
